# EUROPEAN PATENT SPECIFICATION

(11) **EP 3 651 952 B1**
(45) Date of publication and mention of the grant of the patent: **04.08.2021**
(21) Application number: 18733604.5
(22) Date of filing: 25.06.2018
(51) Int. Cl.: B26D 7/20, A22C 17/00, B26D 1/08, B26D 7/08

(54) **CUTTING LAND CONFIGURED TO BE USED IN RELATION WITH A SLICER APPARATUS AND SLICING METHOD**
SCHNEIDFLÄCHE EINGESTELLT ZUR BENUTZUNG BEI EINEM ALLESSCHNEIDER UND VERFAHREN ZUM AUFSCHNEIDEN
SURFACE DE DÉCOUPE CONFIGURÉE POUR ÊTRE UTILISÉE AVEC UNE TRANCHEUSE ET PROCÉDÉ DE TRANCHAGE

(30) Priority: 13.07.2017 DK PA201770571
(43) Date of publication of application: 20.05.2020
(73) Proprietor: Marel Salmon A/S, 9530 Støvring (DK)
(72) Inventor: LARSEN, Palle Kærgaard, 9310 Vodskov (DK)
(74) Representative: Inspicos P/S
(86) International application number: PCT/EP2018/066974
(87) International publication number: WO 2019/011639

(56) References cited:
- EP-A1- 1 649 988
- WO-A1-2016/165715
- DE-A1- 2 502 542
- DE-A1- 10 306 372
- DE-U1- 20 217 257

## Description

### FIELD OF THE INVENTION

The present invention relates to a cutting land configured to be used in relation with a slicer apparatus for slicing food items.

### BACKGROUND OF THE INVENTION

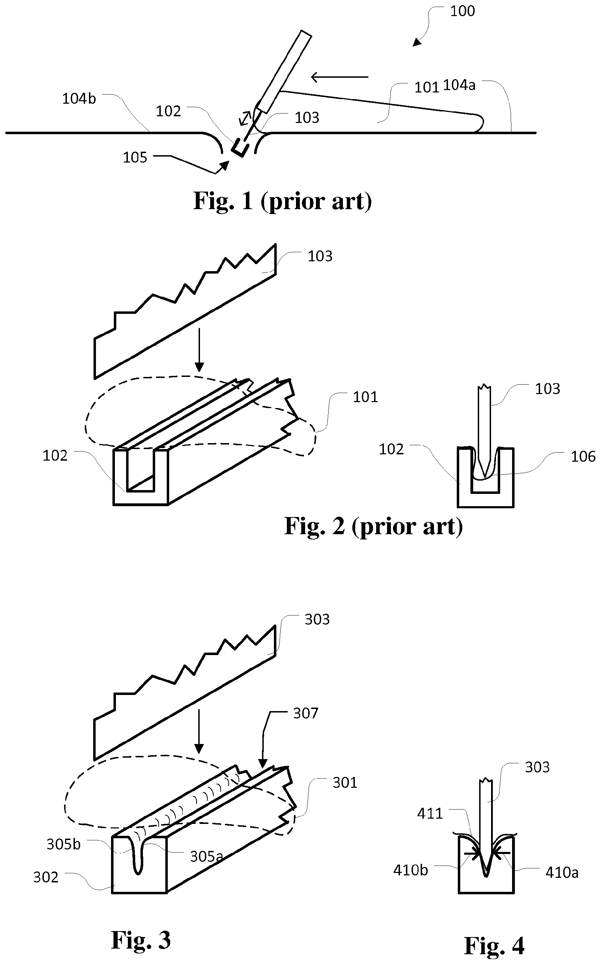

Figure 1 shows a slicer apparatus 100, e.g. such as disclosed inEP2393639 used for slicing in particular fish fillets 101, where the apparatus comprises a cutting means arranged in a conveying path, where the cutting means comprises a set of moveable reciprocating knives 103 that are moveable in a back and forth direction as indicated by the arrow, and a cutting land 102 arranged in a gap 105 between adjacent conveyors 104a,b arranged in an end-to-end manner, where the knives are moveable relative to the cutting land 102 and the surface of the conveyor path. The result of such a cutting may e.g. be very thin fish slices. However, the food item may contain e.g. tissues 106 that are very difficult to cut as shown in figure 2 resulting in the tissues follow the orientation of the cutting means 103 in the cutting land meaning that the cutting fails and adjacent slices may stick together. WO2016/165715 discloses a slicer apparatus for slicing food items and comprising a cutting dolly forming land. Document DE 25 02 542 A1 discloses a cutting land comprising a recess facing a cutting blade such that during cutting the cutting blade partly extends into the recess.

### SUMMARY OF THE INVENTION

On the above background it is an object of embodiments of the present invention to provide an improved cutting land that overcomes the above mentioned problems.

In general, the invention preferably seeks to mitigate, alleviate or eliminate one or more of the above mentioned disadvantages of the prior art singly or in any combination.

In particular, it may be seen as an object of embodiments of the present invention to provide a cutting land that solves the above mentioned problems, or other problems.

To better address one or more of these concerns, in a first aspect of the invention a cutting land is provided configured to be used in relation with a slicer apparatus for slicing food items, where the food items are conveyed by a conveying means along a conveying path, where a gap is provided extending across the conveying path, and where the cutting land is configured to be arranged in and along the gap, where the cutting land comprises a recess facing at least one cutting blade such that during cutting the at least one cutting blade at least partly extends into the recess,
wherein the recess is defined by elongated and opposingly arranged flexible materials arranged in relation to each other such that during cutting the flexible materials exert elastic forces onto the at least one cutting blade causing the flexible materials and thus the width of the recess to follow the thickness of the at least one cutting blade.

The forces which are exerted by the flexible materials onto the at least one cutting blade may be provided by the elastic properties of the materials. The forces may be applied mutually, meaning that the materials exert forces in opposite directions on opposite sides of the at least one cutting blade.

The cutting land may be configured to be used in relation with a slicer apparatus for slicing food items, while the food items are conveyed by a conveying means along a conveying path.

The elastic forces exerting on the cutting blade ensure that difficult tissues will be cut, e.g. due to the pressure supplied on the cutting blade which is transferred to the food item that is being cut instead of allowing the difficult tissues to follow the cutting blade resulting in that the cut fails and adjacent cut portions stick together. The flexible materials may in one embodiment comprise a rubber, or plastic material, or composite material.

The slicing process is preferably performed by temporarily stopping the conveyor while each slicing step takes place, then advancing the food item that is being sliced until next slicing step takes place, then stopping the conveyor etc., where this is repeated until the food item has been sliced. Then the conveyor conveys the food items until the next food object is to be cut, and the process is then repeated.

In one embodiment, the cutting land is attached to a rotation drive mechanism configured to automatically adjust the angular position in relation to adjusted angular position of the at least one cutting blade. This is of a particular advantage if the food product is a salmon fillet, it may be ensured that all the cut slices have a similar areal and thus similar appearance.

In one embodiment, the at least one cutting blade comprises two reciprocating cutting blades. Such a blade arrangement which is well known to a person skilled in the art is in particular preferred when cutting food items such as fish fillet, e.g. salmon fillets, into slices.

In a second aspect of the invention, a slicer apparatus is provided for slicing food items, comprising:
a conveying means for conveying a food item to be cut, while the food item is conveyed along a conveying path, where a gap is provided extending across the conveying path,
- at least one cutting blade,
- a cutting land arranged in and along the gap, the cutting land comprising a recess such that during cutting the at least one cutting blade at least partly extends into the recess,
- a first moving means connected to the at least one cutting blade for moving the at least one cutting blade a distance relative to the cutting land,
wherein the recess of the cutting land is defined by elongated and opposingly arranged flexible materials arranged in relation to each other such that during cutting the flexible materials exert elastic forces onto the at least one cutting blade causing the flexible materials and thus the width of the recess to follow the thickness of the at least one cutting blade.

In one embodiment, the slicer apparatus further comprises a second moving means connected to the at least one cutting blade for moving the at least one cutting blade angularly relative to the conveying path.

In one embodiment, the first and the second moving means are attached to the at least one cutting blade at opposite sides thereof and where the movement of the at least one cutting blade angularly relative to the conveying path is obtained via an angular movement of the first and the second moving means.

In one embodiment, the slicer apparatus further comprises a third moving means connected to the cutting land for adjusting at least an angular position of the cutting land around its longitudinal axis, wherein the third moving means is configured to independently adjust the at least angular position of the cutting land around its longitudinal axis.

In a third aspect of the invention, a method is provided for slicing food items with a slicer apparatus using a cutting land, where the food items are conveyed by a conveying means along a conveying path, where a gap is provided extending across the conveying path, and where the cutting land is configured to be arranged in and along the gap, where the cutting land comprises a recess facing at least one cutting blade such that during cutting the at least one cutting blade at least partly extends into the recess,
wherein the recess is defined by elongated and opposingly arranged flexible materials arranged in relation to each other such that during cutting the flexible materials exert elastic forces onto the at least one cutting blade causing the flexible materials and thus the width of the recess to follow the thickness of the at least one cutting blade.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figure 1 depicts a prior art slicer apparatus which are particularly suitable for cutting fish fillets into thin slices,
figure 2 depicts a prior art cutting land used in relation to the slicer apparatus shown in figure 1, and
figure 3 and 4 depicts a cutting land according to the present invention configured to be used in relation to a slicer apparatus such as the one shown in figure 1.

### DESCRIPTION OF EMBODIMENTS

Figure 3 depicts a cutting land 302 according to the present invention configured to be used in relation to a slicer apparatus 100 such as the one shown in figure 1 for slicing food items 301 while the food items are conveyed by a conveying means 104a,b along a conveying path, where a gap 105 is provided extending across the conveying path, and where the cutting land 302 is configured to be arranged in and along such a gap.

The cutting land according to the present invention comprises a recess 307 facing at least one cutting blade 303 such that during cutting the at least one cutting blade at least partly extends into the recess. The recess is defined by elongated and opposingly arranged flexible materials 305a,b, e.g. rubber, or plastic material, or composite material, arranged in relation to each other such that during cutting the flexible materials exert elastic forces 410a,b as shown in figure 4 onto the at least one cutting blade 303 causing the flexible materials and thus the width of the recess to follow the thickness of the at least one cutting blade. The elastic forces exerting on the cutting blade ensure that difficult tissues 411 will be cut as shown in figure 4, instead of e.g. following the movement of the cutting blade as shown in figure 1.

While the invention has been illustrated and described in detail in the drawings and foregoing description, such illustration and description are to be considered illustrative or exemplary and not restrictive; the invention is not limited to the disclosed embodiments, but to the subject-matter of the appended claims.

## Claims

1. A cutting land (302) configured to be used in relation with a slicer apparatus (100) for slicing food items (301), where the food items are conveyed by a conveying means (104a,b) along a conveying path, where a gap (105) is provided extending across the conveying path, and where the cutting land is configured to be arranged in and along the gap, where the cutting land comprises a recess (307) facing at least one cutting blade (303) such that during cutting the at least one cutting blade at least partly extends into the recess,
**characterized in that** the recess is defined by elongated and opposingly arranged flexible materials (305a,b) arranged in relation to each other such that during cutting the flexible materials exert elastic forces (410a,b) onto the at least one cutting blade causing the flexible materials and thus the width of the recess to follow the thickness of the at least one cutting blade.

2. The cutting land according to claim 1, wherein the flexible materials comprises a rubber or plastic material.

3. The cutting land according to claim 1 or 2, wherein the cutting land is attached to a rotation drive mechanism configured to automatically adjust the angular position in relation to adjusted angular position of the at least one cutting blade.

4. The cutting land according to any of the preceding claims, wherein the cutting land is made of rubber, or plastic material, or composite material.

5. A slicer apparatus for slicing food items, comprising:
• a conveying means for conveying a food item to be cut, where the food item is conveyed along a conveying path, where a gap is provided extending across the conveying path,
• at least one cutting blade,
• a cutting land arranged in and along the gap, the cutting land comprising a recess such that during cutting the at least one cutting blade at least partly extends into the recess,
• a first moving means connected to the at least one cutting blade for moving the at least one cutting blade in distance relative to the cutting land,
**characterized in that** the recess of the cutting land is defined by elongated and opposingly arranged flexible materials arranged in relation to each other such that during cutting the flexible materials exert elastic forces onto the at least one cutting blade causing the flexible materials and thus the width of the recess to follow the thickness of the at least one cutting blade.

6. The slicer apparatus according to claim 5, further comprising:
• a second moving means connected to the at least one cutting blade for moving the at least one cutting blade angularly relative to the conveying path.

7. The slicer apparatus according to claim 6, further comprising:
• a third moving means connected to the cutting land for adjusting at least an angular position of the cutting land around its longitudinal axis, wherein the third moving means is configured to independently adjust the at least angular position of the cutting land around its longitudinal axis.

8. A method of slicing food items with a slicer apparatus using a cutting land (302), where the food items are conveyed by a conveying means (104a,b) along a conveying path, where a gap (105) is provided extending across the conveying path, and where the cutting land is configured to be arranged in and along the gap, where the cutting land comprises a recess (307) facing at least one cutting blade (303) such that during cutting the at least one cutting blade at least partly extends into the recess,
**characterized in that** the recess is defined by elongated and opposingly arranged flexible materials (305a,b) arranged in relation to each other such that during cutting the flexible materials exert elastic forces (410a,b) onto the at least one cutting blade causing the flexible materials and thus the width of the recess to follow the thickness of the at least one cutting blade.

## Patentansprüche

1. Schneidfläche (302), die konfiguriert ist, um in Bezug auf eine Schneidvorrichtung (100) zum Schneiden von Nahrungsmitteln (301) verwendet zu werden, wobei die Nahrungsmittel durch ein Fördermittel (104a, b) entlang eines Förderweges befördert werden, wobei ein Spalt (105) zur Verfügung gestellt ist, der sich über den Förderweg erstreckt, und wobei die Schneidfläche so konfiguriert ist, dass sie in und entlang des Spaltes angeordnet ist, wobei die Schneidfläche eine Aussparung (307) aufweist, die mindestens einer Schneidklinge (303) zugewandt ist, so dass sich während des Schneidens die mindestens eine Schneidklinge zumindest teilweise in die Aussparung hinein erstreckt,
**dadurch gekennzeichnet, dass** die Aussparung durch längliche und entgegengesetzt angeordnete flexible Materialien (305a, b) definiert ist, die relativ zueinander angeordnet sind, so dass die flexiblen Materialien während des Schneidens elastische Kräfte (410a, b) auf die mindestens eine Schneidklinge ausüben, wodurch die flexiblen Materialien und damit die Breite der Aussparung der Dicke der mindestens einen Schneideklinge folgen.

2. Schneidfläche nach Anspruch 1, wobei die flexiblen Materialien ein Gummi- oder Kunststoffmaterial umfassen.

3. Schneidfläche nach Anspruch 1 oder 2, wobei die Schneidfläche an einem Rotationsantriebsmechanismus angebracht ist, der konfiguriert ist, um die Winkelposition in Bezug auf die eingestellte Winkelposition der mindestens einen Schneidklinge automatisch einzustellen.

4. Schneidfläche nach einem der vorhergehenden Ansprüche, wobei die Schneidfläche aus Gummi oder Kunststoffmaterial oder Verbundmaterial besteht.

5. Schneidvorrichtung zum Schneiden von Lebensmitteln, umfassend:
• eine Fördereinrichtung zum Fördern eines zu schneidenden Lebensmittels, wobei das Lebensmittel entlang eines Förderwegs befördert wird, wobei ein Spalt vorgesehen ist, der sich über den Förderweg erstreckt,
• mindestens eine Schneidklinge,
• eine Schneidfläche, die in und entlang des Spaltes angeordnet ist, wobei die Schneidfläche eine Aussparung aufweist, so dass sich während des Schneidens die mindestens eine Schneidklinge zumindest teilweise in die Aussparung erstreckt,
• ein erstes bewegliches Mittel, das mit der mindestens eine Schneidklinge verbunden ist, zum Bewegen der mindestens einen Schneidklinge in der Entfernung relativ zur Schneidfläche,
**dadurch gekennzeichnet, dass** die Aussparung der Schneidfläche durch längliche und entgegengesetzt angeordnete flexible Materialien definiert ist, die relativ zueinander angeordnet sind, so dass die flexiblen Materialien während des Schneidens elastische Kräfte auf die mindestens eine Schneidklinge ausüben, wodurch die flexiblen Materialien und damit die Breite der Aussparung der Dicke der mindestens einen Schneidklinge folgen.

6. Schneidvorrichtung nach Anspruch 5, ferner umfassend:
• ein zweites Bewegungsmittel, das mit der mindestens einen Schneidklinge verbunden ist, um die mindestens eine Schneidklinge winkelig relativ zum Förderweg zu bewegen.

7. Schneidvorrichtung nach Anspruch 6, ferner umfassend:
• ein drittes bewegliches Mittel, das mit der Schneidfläche verbunden ist, um mindestens eine Winkelposition der Schneidfläche um ihre Längsachse einzustellen, wobei das dritte bewegliche Mittel konfiguriert ist, um die mindestens winkelige Position der Schneidfläche um ihre Längsachse unabhängig anzupassen.

8. Verfahren zum Schneiden von Nahrungsmitteln mit einer Schneidvorrichtung unter Verwendung einer Schneidfläche (302), wobei die Nahrungsmittel durch ein Fördermittel (104a, b) entlang eines Förderweges befördert werden, wobei ein Spalt (105) vorgesehen ist, der sich über den Förderweg erstreckt, und wobei die Schneidfläche so konfiguriert ist, dass sie in und entlang des Spaltes angeordnet ist, wobei die Schneidfläche eine Aussparung (307) aufweist, die mindestens einer Schneidklinge (303) zugewandt ist, so dass sich während des Schneidens die mindestens eine Schneidklinge zumindest teilweise in die Aussparung hinein erstreckt,
**dadurch gekennzeichnet, dass** die Aussparung durch längliche und entgegengesetzt angeordnete flexible Materialien (305a, b) definiert ist, die relativ zueinander angeordnet sind, so dass die flexiblen Materialien während des Schneidens elastische Kräfte (410a, b) auf die mindestens eine Schneidklinge auswirken, wodurch die flexiblen Materialien und damit die Breite der Aussparung der Dicke der mindestens einen Schneidklinge folgen.

## Revendications

1. Plat de coupe (302) configuré pour être utilisé en association avec un appareil trancheur (100) destiné à trancher des produits alimentaires (301), dans lequel les produits alimentaires sont transportés par un moyen de transport (104a,b) le long d'un trajet de transport, où il est prévu un espace (105) s'étendant à travers le trajet de transport, et où le plat de coupe est configuré pour être disposé dans l'espace et le long de celui-ci, où le plat de coupe comprend une cavité (307) tournée vers au moins une lame de coupe (303) de telle façon que pendant la coupe, l'au moins une lame de coupe s'étend au moins partiellement dans la cavité,
**caractérisé en ce que** la cavité est définie par des matériaux souples (305a,b) allongés et disposés de façon opposée, disposés de telle façon les uns par rapport aux autres que pendant la coupe, les matériaux souples exercent des forces élastiques (410a,b) sur l'au moins une lame de coupe, incitant les matériaux souples et par conséquent la largeur de la cavité à suivre l'épaisseur de l'au moins une lame de coupe.

2. Plat de coupe selon la revendication 1, dans lequel les matériaux souples comprennent un caoutchouc ou une matière plastique.

3. Plat de coupe selon la revendication 1 ou 2, dans lequel le plat de coupe est fixé à un mécanisme d'entraînement en rotation configuré pour régler automatiquement la position angulaire par rapport à une position angulaire réglée de l'au moins une lame de coupe.

4. Plat de coupe selon l'une quelconque des revendications précédentes, dans lequel le plat de coupe est constitué de caoutchouc, ou d'une matière plastique, ou d'une matière composite.

5. Appareil trancheur destiné à trancher des produits alimentaires, comprenant :
• un moyen de transport destiné à transporter un produit alimentaire à couper, le produit alimentaire étant transporté le long d'un trajet de transport, un espace étant prévu de manière à s'étendre à travers le trajet de transport,
• au moins une lame de coupe,
• un plat de coupe disposé dans l'espace et le long de celui-ci, le plat de coupe comprenant une cavité, de sorte que pendant la coupe, l'au moins une lame de coupe s'étend au moins partiellement dans la cavité,
• un premier moyen de déplacement relié à l'au moins une lame de coupe pour déplacer l'au moins une lame de coupe sur une distance par rapport au plat de coupe,
**caractérisé en ce que** la cavité du plat de coupe est définie par des matériaux souples allongés et disposés de façon opposée, disposés de telle façon les uns par rapport aux autres que pendant la coupe, les matériaux souples exercent des forces élastiques sur l'au moins une lame de coupe, incitant les matériaux souples et par conséquent la largeur de la cavité à suivre l'épaisseur de l'au moins une lame de coupe.

6. Appareil trancheur selon la revendication 5, comprenant en outre :
• un deuxième moyen de déplacement relié à l'au moins une lame de coupe pour déplacer l'au moins une lame de coupe angulairement par rapport au trajet de transport.

7. Appareil trancheur selon la revendication 6, comprenant en outre :
• un troisième moyen de déplacement relié au plat de coupe pour régler au moins une position angulaire du plat de coupe autour de son axe longitudinal, le troisième moyen de déplacement étant configuré pour régler de façon indépendante l'au moins une position angulaire du plat de coupe autour de son axe longitudinal.

8. Procédé de tranchage de produits alimentaires avec un appareil trancheur à l'aide d'un plat de coupe (302), où les produits alimentaires sont transportés par un moyen de transport (104a,b) le long d'un trajet de transport, où il est prévu un espace (105) s'étendant à travers le trajet de transport, et où le plat de coupe est configuré pour être disposé dans l'espace et le long de celui-ci, où le plat de coupe comprend une cavité (307) tournée vers au moins une lame de coupe (303), de telle façon que pendant la coupe, l'au moins une lame de coupe s'étend au moins partiellement dans la cavité,
**caractérisé en ce que** la cavité est définie par des matériaux souples (305a,b) allongés et disposés de façon opposée, disposés de telle façon les uns par rapport aux autres que pendant la coupe, les matériaux souples exercent des forces élastiques (410a,b) sur l'au moins une lame de coupe, incitant les matériaux souples et par conséquent la largeur de la cavité à suivre l'épaisseur de l'au moins une lame de coupe.
